# EUROPEAN PATENT APPLICATION

(11) **EP 4 152 288 A1**
(43) Date of publication of application: **22.03.2023**
(21) Application number: 22196133.7
(22) Date of filing: 16.09.2022
(51) Int. Cl.: G08B 1/08, G08B 3/10

(54) **SMART DOORBELL SYSTEM AND METHOD WITH CHIME LISTENER**

(30) Priority: 17.09.2021 US 202163245395 P
(71) Applicant: Arlo Technologies, Inc., Carlsbad, CA 92008 (US)
(72) Inventor: McRae, Matthew, Laguna Niguel (US)
(74) Representative: Grünecker Patent- und Rechtsanwälte PartG mbB

(57) **Abstract**

A smart doorbell system including a chime listener that is configured to detect operation of a chime of a doorbell system in response to activation of a doorbell of the doorbell system. In response to this detection, the system sends a notification signal to a user device such as a smart phone. The chime listener may be configured to send an activation signal to an imaging device, typically having a camera, in response to the detection of chime operation. The imaging device is activated in response to receiving the activation signal and transmits images and/or other media which can viewed on a user device such as a smart phone.

## Description

### BACKGROUND OF THE INVENTION

### 1. Field of the Invention

The present invention relates to a smart doorbell system and method, and more particularly, to a smart doorbell system that can detect chime operation and react accordingly.

### 2. Discussion of the Related Art

Smart doorbells are being employed in an ever-increasing range of applications. As with any doorbell, a smart doorbell has a button that is activated by a visitor to announce the visitor's presence at a home, business, etc. (collectively and individually referred to herein as "home" for ease of reference). A smart doorbell can notify a user when someone has activated the doorbell, whether the user is at home or away. The typical smart doorbell includes a traditional button that can be pressed to actuate the doorbell, typically resulting in the actuation of a chime located in the home. Doorbell actuation also causes a wireless notification to be sent to a user device, such as smart phone, upon doorbell actuation. The notification may be audio and/or visual in nature. If the doorbell is integrated with or connected to a camera, the doorbell may also cause a still or video image of the doorbell actuator to be transmitted to the user device. Some smart doorbells provide two-way communication between the doorbell and the user device.

Current smart doorbells in the marketplace generally are designed to replace the existing doorbell and require wiring to utilize the existing chime in a home. This need for wiring often requires a bypass or other circuitry to be installed at the chime so that the smart doorbell can draw power and only ring the chime when the button is pressed. The need to install this circuitry often causes issues for users trying to set up the system on their own. In some cases, the smart doorbell system may be incompatible with the existing doorbell/chime system, requiring installation of a new chime that is compatible with the smart doorbell.

Additionally, most current smart doorbells in the marketplace integrate the camera into the doorbell itself. The camera necessarily is positioned at the location of a typical doorbell button. The ability to adjust the camera's field of view is limited or non-existent, resulting in less-than-optimal placement of the camera that may not fully capture key characteristics, possibly including the visitor's face or items of interest that are not directly in front of the door.

There is a need in the art for a smart doorbell system that is able to interact with a chime of another doorbell system, which may be an already existing third-party provided doorbell system, without having to wire the doorbell system to the chime.

There is also a need for a smart doorbell that can be integrated into or combined with an existing camera based monitoring system.

### SUMMARY OF THE INVENTION

According to one aspect of the invention, one or more of these needs is met through a smart doorbell system that includes a chime listener. The chime listener is configured to detect operation of a chime of a traditional doorbell system in response to activation of a doorbell. The smart doorbell system is configured to wirelessly transmit an audio and/or visual notification to a user device upon detecting doorbell activation.

The smart doorbell system may also be integrated with or connected to an imaging device, such as a camera, in which case detection of chime operation causes capture and transmission of still or video images to the user device. In one implementation, the doorbell system is configured to send an activation signal to the camera in response to receiving the signal from the chime. In response to receiving the activation signal, the imaging device transitions from a standby state to an active state in order to capture media in the form of still or video footage of the area of interest.

In accordance with another aspect of the invention, the smart doorbell system may also include a base station that is in communication with both the chime listener and the imaging device. For example, the base station may host a communication network such as a wireless local area network (WLAN), and the chime listener, imaging device, and base station may communicate with each other via the communication network.

In accordance with yet another aspect of the invention, the base station may be connectable to a user device and/or an external server. The base station may be able to transmit a notification to the user device and/or the external server when the imaging device transitions to the active state. In addition, the base station may be able to transmit media to the user device and/or the external server for access by a user either in real time or at a later time. The media may be both audio and video footage.

The chime listener may include a signal receiver or detector, a controller, and a communication device. The signal receiver is configured to receive the signal from the chime, the controller is configured to generate the activation signal, and the communication device is configured to transmit the activation signal.

The imaging device may include the camera, a microphone, a controller, and a communication device. The camera and microphone are configured to capture footage of the area of interest when in the active state, the controller is configured to transition the camera and microphone between the standby state and the active state, and the communication device, such as a radio, is configured to detect chime operation and transmit the footage of the area of interest.

The base station may include a first communication device, a second communication device, and a controller. The first communication device is configured to communicate with the chime listener and/or the imaging device; the second communication device is configured to access a wide area network (WAN); and the controller is configured to facilitate communication between the chime listener, the imaging device, the external server, and/or the user device.

Also disclosed is a method of operating a smart doorbell system that includes a chime listener. The method includes detecting chime operation and, in response to the detection, sending a notification to a user device indicative of chime operation. If the system includes an imaging device such as a camera, the notification may include still or video images captured by the imaging device.

These and other objects, advantages and aspects of the invention will become apparent from the following description. The particular objects and advantages described herein can apply to only some embodiments falling within the claims and thus do not define the scope of the invention. In the description, reference is made to the accompanying drawings which form a part hereof, and in which there is shown a preferred embodiment of the invention. Such embodiment does not necessarily represent the full scope of the invention, and reference is made, therefore, to the claims herein for interpreting the scope of the invention.

### BRIEF DESCRIPTION OF THE DRAWINGS

Preferred exemplary embodiments of the invention are illustrated in the accompanying drawings in which like reference numerals represent like parts throughout, and in which:
FIG. 1 is a schematic view of a space having a smart doorbell system, according to an embodiment of the invention;
FIG. 2 schematically illustrates the smart doorbell system of FIG. 1; and
FIG. 3 is a flowchart showing the functional interaction between the smart doorbell system of FIG. 1 and an existing doorbell system.

### DETAILED DESCRIPTION

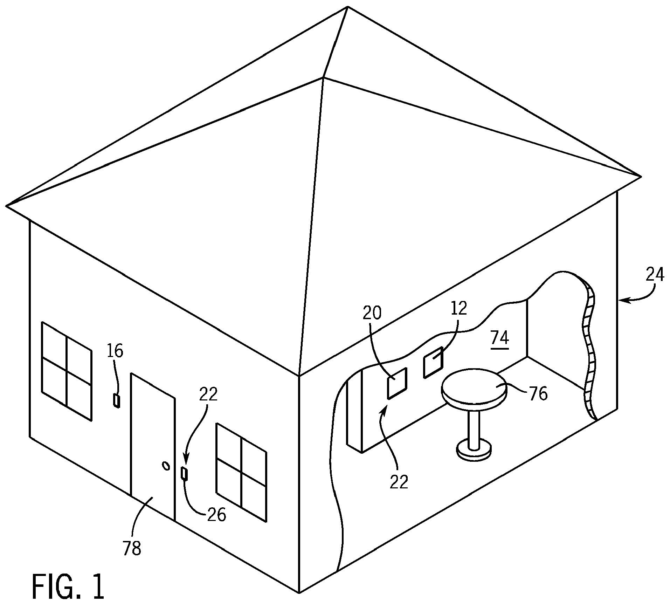

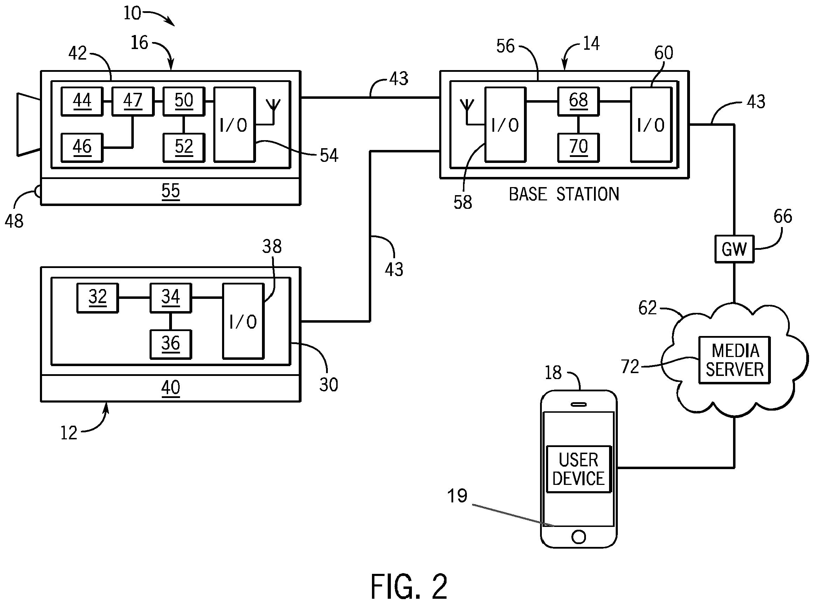

Referring now to FIGS. 1 and 2, a smart doorbell system 10 is shown in accordance with an embodiment of the invention. The smart doorbell system 10 includes a chime listener 12, hub or base station 14, and at least one imaging device 16. As discussed in more detail below, the imaging device includes a camera, and the imaging device 16 may be referred to as a camera for ease of discussion. While FIG. 1 depicts the use of a single imaging device 16, it is contemplated that any number of imaging devices 16 may be linked to the base station 14. The system 10 may include other devices as well, such as: smoke or CO detectors or other sensors, other smart security devices such as floodlights, or even smart home devices such as a refrigerator, lighting system, or thermostat. The system 10 communicates with one or more user devices 18, such as a smart phone, tablet, laptop, or PC. Each user device 18 includes a display 19 that typically includes both an audio display and a visual display such as a touchscreen, internal computing and storage capabilities, and a program or application servicing as a user interface with the system 10.

Still referring to FIG. 1, the chime listener 12 is configured to "listen for" or detect operation of a chime 20 of a doorbell system 22 within a space 24 - such as a home, condominium, apartment, office, etc. - upon actuation of a doorbell 26 of the doorbell system 22 at a door 28 of the space 24. The doorbell system 22 includes the chime 20, which typically is located in the interior of the space 24, and a doorbell 26 located near a door or other access point, such as a receptionist desk of an office. The doorbell system 22 may be existing or installed simultaneously with the smart doorbell system 10. The doorbell 26 includes an actuator, typically a button, that generates a signal when pressed or otherwise activated. That signal is transmitted via wires or wirelessly to the chime 20, which generates an audio and possibly a visible signal or notification in response to receipt of the signal.

The chime listener 12 detects and reacts to chime operation without having to move, rewire, or otherwise interact with or modify the doorbell 26 and chime 20 of the existing doorbell system 22 of the space 24. The chime listener 12 may be placed at any location within the space 24 where the chime listener 12 may detect the signal from the existing chime 20. If the chime listener 12 detects audio chime operation using a microphone, the chime listener 12 may be placed anywhere within "earshot", or the operating range of the microphone. For example, the chime listener 12 may be mounted on a wall 74 (as shown in FIG. 1), placed on a piece of furniture 76, or otherwise be freestanding within the space 24.

As also shown in FIG. 1, the imaging device 16 may be placed and configured - through suitable mounting of the imaging device 16 and/or through suitable manipulation of its controls - to monitor an area of interest, such as a door 78 of the space 24 adjacent to the doorbell 26 itself. However, the imaging device 16 need not be integrated with or even located near the doorbell 26. It instead could be mounted to provide a more optimized view of the visitor's face and/or articles located to the left or right of the door 78. It could even be mounted on a pole or tree near the door 78.

The system 10, including the chime listener 12, base station 14, and imaging device 16, is shown in greater detail in FIG. 2. The chime listener 12 includes electronic circuity 30 which may include a signal receiver 32 or chime detector, a controller 34, a non-transient memory storage 36, and/or a wireless I/O communication device 38, amongst other things. The signal receiver 32 may detect chime operation in any number of ways. It could conceivably be wired to the chime to detect the flow of drive current though the chime, in which case the received signal is an electrical signal. Another example in which the doorbell is configured for use by the hearing impaired, the "chime" may display a visual notification, such as a flashing light, that can be detected by the signal receiver 32. In the most typical implementation, the signal receiver includes a listening device, such as a microphone, which is configured to detect the sound emanating from the chime 20 of the doorbell system 22 when the chime 20 is activated by the doorbell 26. In addition, the chime listener 12 may be battery powered or wired. If the chime listener 12 is wired it may include a power supply 40, such as a battery and/or power cable.

In response to detection of chime operation by the signal receiver 32 of the chime listener 12, the chime listener 12 is further configured to transmit a signal to the imaging device 16 - either directly or via the base station 14 - by way of the I/O communication device 38. The chime listener 12 may communicate with the imaging device 16 and/or the base station 14 through a communication network such as a private Wireless Local Area Network (WLAN) 43. The WLAN 43 may be hosted by the base station 14, which operates as an access point. One such WLAN is an IEEE 802.11 network.

The imaging device 16 may contain electronic circuity 42 that may include a video element 44, such as a still or video camera, configured to record images; an audio element 46, such as a microphone, configured to record and/or transmit audio; a media encoder 47; visible and/or infrared (IR) lights 48; a controller 50; a non-transient memory storage 52; a wireless I/O communication device 54; and/or a power supply 55, amongst other elements of electronic circuitry known to one skilled in the art. The video element 44 most typically will be configured to capture and transmit multi-frame or video images. The audio element 46 most typically will be a microphone, typically coupled with a speaker. Upon detecting chime operation by the chime listener 12, the smart doorbell system 10 activates the video element (camera) 44 and/or audio element 46 (microphone) of the imaging device 16 in order to begin capture and recording video and/or audio of an area of interest.

Still referring to FIG. 2, the base station 14 may include electronic circuitry 56 including a first wireless I/O communication device 58 for communicating with client devices of the WLAN. These client devices include the chime listener 12, the imaging device(s) 16, and any other sensors and smart home devices forming a part of the system 10. Base station 14 also has a second wired or wireless I/O communication device 60 for accessing the Wide Area Network (WAN) 62 through the WLAN 43 via a gateway or router 66. The base station 14 additionally includes a controller 68, and/or a non-transient memory storage 70, amongst other things. It should be apparent that the term "circuity" as used in this application can comprise hardware, firmware, software, or any combination thereof. The base station 14 could be self-contained as shown. Part or all of its circuitry and the associated functions instead could be contained in whole or in part in other components of the smart doorbell system 10 or the server 32. For example, the circuitry and functionality of the base station 14 could be incorporated into the gateway router 66, in which case the router 66 also serves as a base station.

The imaging device(s) 16 could be ARLO^{®} cameras, and the base station 14 (if present) could be an ARLO^{®} base station, each available on a stand-alone basis or as part of any of a number of systems available from Arlo Technologies, Inc. of Carlsbad, California.

The base station 14 may also be in communication with an external server 72, which may be cloud-server accessible via the gateway 66 router and the WAN 62. The server 72 can include or be coupled to a microprocessor, a microcontroller, or other programmable logic element - individually and collectively considered a "controller" - configured to execute a program. The controller may be contained in whole in the base station 14 or the server 72. Alternatively, interconnected aspects of the controller and the program executed by it could be distributed in various permutations within the chime listener 12, the imaging device 16, the base station 14, the user device 18, and the server 72. This program, while operating at the server level, may be utilized in filtering, processing, categorizing, storing, recalling, and transmitting data received from the imaging device 16 via the base station 14.

While FIG. 2 illustrates the circuitries 30, 42, 56 having certain numbers of communication devices, various embodiments of the invention may include circuitries 30, 42, 56 having different numbers and types of wireless I/O communication devices than shown. Further, the gateway router 66 and user device 18 each have circuitry that includes corresponding hardware, firmware, software, or any combination thereof for controlling, for example, data transmission or other communications. In addition, while FIG. 2 illustrates the chime listener 12 and the imaging device 16 as being separate elements disposed at separate locations, another embodiment of the invention may include a chime listener 12 and imaging device 16 combined into a single element. In turn, the above circuitries 30, 42 may be remain separate or be combined.

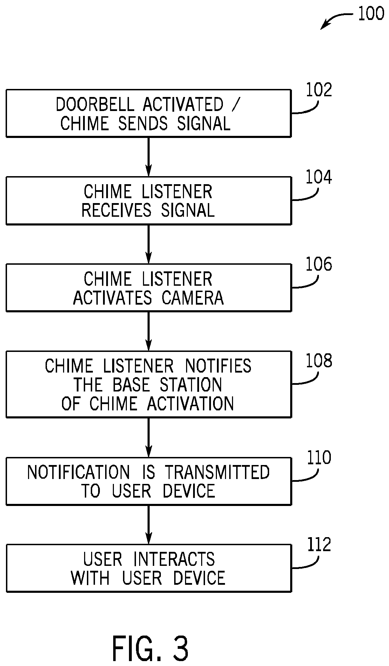

Referring to FIG. 3, a flowchart illustrates a process 100 of the functional interaction between the smart doorbell system 10 of the present invention and a doorbell system 22 within the space 24. The doorbell system 26 of this embodiment comprises a traditional system having a chime 20 that generates an audio notification, such as series of musical notes, upon doorbell activation. At block 102, the doorbell 26 is activated by a person, and the connected chime 20 tolls a sound or series of sounds in the usual manner.

At block 104, the chime listener 12 of the smart doorbell system 10 detects chime operation. As mentioned above, while the signal receiver 32 is configured to receive audio signals using a microphone in the present embodiment of the invention, the signal receiver 32 may be configured to receive other signals, such as visual signals or electrical signals.

At block 106, the chime listener 12 transmits an activation signal to the imaging device 16 - either directly or via the base station 14 - in order to activate the imaging device 16 and begin recording video and/or audio of the area of interest. As previously stated, the communication device 38 of the chime listener 12 can communicate with the communication device 58 of the base station 14 and the communication device 54 of the imaging device 16 via the WLAN 43. In various embodiments of the invention the actual command to activate the imaging device 16 may be generated at the controller 34 of the chime listener 12, the controller 50 of the imaging device 16, the controller 68 of the base station 14, or the user device 18 via user input. Further, the memory storage system 36 of the chime listener, the memory storage system 52 of the imaging device 16, the memory storage system 70 of the base station 14, and/or the memory storage system of the server 72 are able to save data regarding the activation of the doorbell 26 and the recorded video and/or audio from the imaging device 16.

At block 108, the chime listener 12 notifies the remainder of the system 10 of the activation of the chime. As stated above, the communication device 38 of the chime listener 12 can communicate with the first communication device 58 of the base station 14 and/or with the communication device 54 of the imaging device 16 via the WLAN 43. It should be noted that the functions performed in block 108 may occur before, simultaneously with, or after those of block 106.

At block 110, the system 10 notifies the user device 18 of the activation of the chime 20 and the resultant activation of the imaging device 16. This notification may, for example, take the form of a visual push notification or GIF. a tone, a voice message such as "doorbell activation", and/or a vibration. This notification may be transmitted indirectly to the user device 18 from the base station 14 via the server 72, but it is not necessary to do so.

At block 112, a user interfaces with the user device 18 to access media captured by the imaging device 16 either in real time or after the recording. The media may be in the form of still or video images, and typically will be processed by the server The user may also use the user device 18 to interact with a person within the area of interest of the space 24 via the imaging device 16. That is, the user may interact with the user device 18 to listen and talk to the person within the area of interest via the microphone and speaker audio elements of the imaging device 16. The user device 18 may be able to communicate with the base station 14 for accessing the audio or video media by way of the WAN 62 - either directly or via the server 72.

In varying embodiments of the invention, the video element 44 and/or audio elements 46 of the imaging device 16 may remain in the active state for a predetermined period of time. The user may also be able to use the user device 18 to transition the camera between the inactive/standby state and the active state.

The smart doorbell system 10 need not react to detection of chime operation by the chime listener in the manner described above. For example, the system 10 could transmit a notification to the user device(s) before activating the camera. As another example, the chime listener need not interact with an imaging device at all. In this case, the smart doorbell system 10 could simply transmit a notification to the user device 18 upon detection of chime operation by the chime listener 12. Any imaging device that is present in the system would be activated only via command through the user device 18 or by independent detection of a triggering event (such as motion detection) by that imaging device or another client device in the WLAN.

Although the best mode contemplated by the inventors of carrying out the present invention is disclosed above, practice of the above invention is not limited thereto. It will be manifest that various additions, modifications, and rearrangements of the features of the present invention may be made without deviating from the spirit and the scope of the underlying inventive concept.

It should be appreciated that such a development effort might be complex and time consuming, but would nevertheless be a routine undertaking of design, fabrication, and manufacture for those of ordinary skill having the benefit of this disclosure. Nothing in this application is considered critical or essential to the present invention unless explicitly indicated as being "critical" or "essential."

## Claims

1. A smart doorbell system comprising:
a chime listener configured to detect operation of a chime in response to activation of a doorbell and to generate a notification signal in response to detection of chime operation; and
a controller that is in communication with the chime listener and that, using a program stored in a non-transitory memory, is configured to cause a notification to be transmitted to a user device that the chime has been activated.

2. The smart doorbell system of claim 1, further comprising an imaging device in communication with the chime listener and configured to monitor an area of interest, and wherein the notification includes an image captured by the imaging device.

3. The smart doorbell system of claim 2, wherein
the system is configured to send an activation signal to the imaging device in response to the detection of chime operation by the chime listener; and wherein
the imaging device is configured to transition from a standby state to an active state in response to receiving the activation signal.

4. The smart doorbell system of claim 2, further comprising a base station in wireless communication with the imaging device, wherein the chime listener is configured to communicate wirelessly with the base station and/or the imaging device.

5. The smart doorbell system of claim, wherein the base station is configured to communicate with an external server that is in communication with the user device.

6. The smart doorbell system of any of the preceding claims, wherein the imaging device includes a camera, an audio element, a controller configured to transition the camera and audio element between the standby state and the active state, and a communication device that is configured to receive an activation signal and to transmit media from at least one of the camera and the audio element.

7. The smart doorbell system of any of the preceding claims, wherein the chime listener includes a signal receiver configured to receive the signal from the chime, a controller configured to generate the activation signal, and a communication device.

8. The smart doorbell system of any of the preceding claims, wherein the chime listener includes a microphone.

9. A method of operating a smart doorbell system having a chime listener, the method comprising:
using the chime listener to detect operation of a doorbell chime; and
in response to the detection, sending a notification to a user device indicative of chime operation.

10. The method of claim 9, wherein detecting chime operation comprises using a microphone to detect sound generated by the chime.

11. The method of either of claims 9 and 10, further comprising generating an activation signal in response to the detection; communicating the activation signal to an imaging device of the smart doorbell system and; in response to receipt of the activation signal at the imaging device, transitioning the imaging device from a standby state to an active state.

12. The method of any of claims 9-11, further comprising establishing a wireless local area network (WLAN) between the chime listener, the imaging device, and a base station.

13. The method of claim 12, wherein the notification is transmitted by an external server in communication with the base station via a wide area network (WAN).

14. The method of any of claims 9-13, wherein the user device comprises one of a smart phone and a tablet computer.

15. The method of any of claims 9-14, wherein the notification comprises at least one of a visual push notification and an audio alert.
